Europäisches Patentamt

(19) European Patent Office

Office européen des brevets

(11) Publication number: **0 105 566**
**B1**

## (12) EUROPEAN PATENT SPECIFICATION

(45) Date of publication of patent specification: 20.08.86

(51) Int. Cl.⁴: **A 23 C 20/00,** A 23 C 19/06, A 23 C 19/064

(21) Application number: 83201403.9

(22) Date of filing: 30.09.83

(54) A process for preparing food products having the character of cheese and products resembling cheese.

(30) Priority: 30.09.82 NL 8203817

(43) Date of publication of application:
18.04.84 Bulletin 84/16

(45) Publication of the grant of the patent:
20.08.86 Bulletin 86/34

(84) Designated Contracting States:
DE FR GB NL

(56) References cited:
US-A-4 075 360

CHEMICAL ABSTRACTS, vol. 75, no. 13, 27th
September 1971, page 259, no. 87329j,
Columbus, Ohio, USA

CHEMICAL ABSTRACTS, vol. 95, no. 11,
November 1981, page 523, no. 185766g,
Columbus, Ohio, USA

(73) Proprietor: DMV-Campina B.V.
NCB Laan 68
NL-5462 GE Veghel (NL)

(72) Inventor: Van Gennip, Adrianus Hendrikus
Maria
Dommeloord 12
NL-5283 LK Boxtel (NL)
Inventor: Van der Sommen, Carolus Gerardus
Maria
Het Slotje 6
NL-5421 RB Gemert (NL)

(74) Representative: Urbanus, Henricus Maria, Ir.
et al
c/o Vereenigde Octrooibureaux Nieuwe
Parklaan 107
NL-2587 BP 's-Gravenhage (NL)

(56) References cited:
NETHERLANDS MILK DAIRY JOURNAL, vol.
26, no. 3/4, 1972, pages 168-177, TH.J. GEURTS
et al.: "Brine composition and the prevention of
the defect "soft rind" in cheese"

"Fundamentals of dairy chemistry", 1965, pages
606-616, edited by Byron H. Webb and Arnold
H. Johnson, The Avi Publishing Company, Inc.,
Westport, Connecticut, USA

Courier Press, Leamington Spa, England.

## Description

This invention relates to the preparation of food products having the character of cheese and to products resembling cheese. By cheese are understood products produced by curdling from milk or derivatives thereof, from which milk constituents may or may not have been withdrawn (for example, whey), or to which milk constituents have been added (for example, cream), and which have undergone a ripening process to a product ready for consumption.

The preparation of cheese is a process that has been known for thousands of years, in which milk from cows, goats, sheep or other animals is curdled by the addition of rennet and, possibly, to a greater of lesser extent, by acidulation with lactic acid bacteria. Subsequently, the "curd" thus formed is pressed in moulds or vats, salted or brined, and ripened. In the preparation of natural cheese, a proteolytic enzyme, such as rennet, is caused to act on the milk protein, as a result of which, in the kappa-casein, a specific peptide bond between phenylalanine in the 105 position and methionine in the 106 position is broken. The kappa-casein thus split has become calcium-reactive in that it is capable of reacting with calcium ions, and not only does it form a precipitate itself, but at the same time the other casein components become insoluble. Casein in which the kappa-casein has been split in this specific way is known by the name of paracasein, and the compounds of paracasein with metalions are called paracaseinates. Natural cheese contains the milk protein in the form of calcium paracaseinate, which chemical composition affects the physical and organoleptical properties of the cheese. In the cheese making processes most often used, the splitting of the kappa-casein, and hence the milk protein's becoming calcium-reactive are caused to take place in milk, so that the calcium ions present can react directly and precipitate the protein as a curd.

Minarik, Dvorak et al. described at the 18th International Dairy Congress at Sydney in 1970 (Vol. 1E, page 39, page 40) that calcium can first be removed from milk, thereafter rennet enzyme caused to act, and subsequently calcium ions again added to the milk so that a cheese-like curd can be formed which separates from the liquid whey, with the object of developing a continuous curdling process. As stated by these researchers, however, they did not succeed in realizing a cheese making process suitable for practical use. In later research work, too, as described for example by Visser in Neth. Milk and Dairy J. 30 (1970) 41, and by De Jong et al. in Neth. Milk and Dairy J. 31 (1971) 296, rennet has been allowed to act on casein in milk after the previous removal of calcium so that a calcium paracaseinate could not immediately be formed, but a sodium paracaseinate solution was formed. Only later were calcium ions again added to the milk.

As far as, in research on cheese making, such calcium-reactive paracaseinates have been allowed to be formed without causing them to react immediately with calcium ions to form an undissolved curd, the mixture has approximately the composition of milk, which is then split into whey and an initially shapeless curd, which contains a great amount of moisture, and which must be further stripped of whey and given a desired shape by pressing. Should these experiments be reproduced on a technical scale, one would, on some points, experience the same drawbacks as in a traditional cheese making process. Thus, for example, equally large vats would be required for the curd formation as in the conventional process, and the amount of whey-like by-product, too, is almost equally large as the amount of cheese whey normally obtained.

"The production of imitation-cheese-products is known from patent-publications like US patent nr. 4,075,360, in which publication the use of alkalicaseinates and calciumcaseinate is mentioned. But products on the basis of that kind of caseinates, in which the kappa-caseinportion is not modified by the action of a chymosin-like enzyme into a calciumreactive product, lack some characteristic structural properties that are essential in natural cheeses."

It has now been found that, while avoiding such disadvantages, and at the same time achieving some particular advantages, cheese with the same structure-determining proteins as normal cheese-types can be made by preparing a homogeneous, kneadable water-containing mass with a solubilized milk protein which contains little, if any, calcium, and in which at least a portion of the kappa-casein has been converted by the action of a chymosine-like enzyme into a calcium-reactive product, and possibly mixing this mass with other ingredients, including fat and water, and subsequently adding calcium ions to shaped pieces of this mass and converting these pieces into cheese or cheese-like products. This means, therefore, that cheese can be prepared without using the traditional ways of milk curdling with rennet or the preparation of processed cheese, by isolating the milk protein from milk, and converting it outside the milk medium into soluble, calcium-reactive paracasein. The paracasein can serve, in the form of a soluble sodium or potassium paracasein, with water, milk fat and other milk constituents, as a raw material for an emulsion, which is then transformed into cheese outside the milk medium by the action of calcium compounds. As, during this latter transformation, the dry content of the emulsion need not essentially be changed, the form of the emulsified mass is maintained, and no whey is formed as a by-product.

In the traditional cheese making process, a number of processes proceed simultaneously or directly one after the other, at any rate they are indissolubly connected, and it is hardly possible to affect one of those processes without changing the course of the others as well. In the process according to the present invention, the cheese making process is split up into sub-processes, which offers possibilities for each sub-process to be caused to proceed in as favourable and efficient a manner as possible. Thus, in a traditional cheese making process, it is inevitable for the curd to form at the moment when the whey is separated. In this connection conditions should be selected so that as little protein and fat is lost in the whey as possible, and so as to produce at the same time the most suitable curd form, consistency and composition. The process can now, for example, comprise previously decreaming the milk by centrifugation, thereafter rendering the casein in the decreamed milk calcium-reactive and separating the whey, making an emulsion with the desired content of protein, fat and further constituents, and finally effecting the reaction with calcium ions to form the cheese. In all these sub-processes, the mechanical, physical and chemical conditions can be adjusted so as to optimize the process. The advantages provided by the additional freedoms compared with conventional cheese making processes are not only limited to the preparation of the fresh cheese curd, for the invention also gives extra dimensions to the process in the subsequent phases. It is true that natural cheese may be a product having long keeping characteristics, but then it undergoes typical changes during storage, owing to which a fresh product ripens via young to matured and old cheese. This ripening process is determined by both physical processes, such as drying, and fermentative processes under the influence of the enzymes added and micro-organisms present.

In the process according to the present invention, the fermentative ripening processes can be controlled if the ingredients are mixed to form a homogeneous kneadable mass at a temperature of between 70 and 135°C, and thereafter the admixture of the product with micro-organisms is almost fully avoided. Owing to the use of these temperatures, which are also conventional in the preparation of processed cheese, the most important micro-organisms and ferments that affect the ripening process are deactivated. If, during the subsequent treatment in a brine bath, in which calcium ions are added, and during the subsequent operations, such as packing, admixture with micro-organisms is avoided, there is produced a product which, like for example a processed cheese product, is hardly, if at all, subject to changes in quality during storage for prolonged periods of time. By allowing fermentative ripening processes with enzymes or micro-organisms to take place in the mixture prior to the heat treatment, products with good keeping characteristics and having the flavour of old or young cheese types can be produced as desired.

On the other hand, the process according to the present invention also offers possibilities of subjecting cheese to subsequent ripening procedures under better controlled conditions. More specifically, this can be achieved by adding to the mixture of ingredients, optionally after the heat treatment to deactivate micro-organisms and/or enzymes that may be present, selected enzyme preparations and/or micro-organism cultures which affect the ripening of cheeses of known types, and allowing the product, after conversion into cheese by reaction with calcium ions, to ripen under otherwise known conditions, avoiding temperatures at which the enzymes and/or micro-organisms are deactivated.

In this process any desired flavour development can be promoted by a selection of the nature and proportion of the ingredients which play a role in the formation of such flavour.

Both if a pasteurizing heat treatment is used in the cheese making process, thereby stopping further maturing, and if the cheese, after the cheese making process proper, is allowed to mature fermentatively, a virtually unlimited choice of flavour types is possible, which certainly is not less than the number of traditional cheese types.

In addition to these advantages of great possibilities in variation in quality and type of cheese, the process according to the invention also offers advantages in the field of technology and economy. In fact, the cheese making process can be started at any place in the world and at any time, no matter whether fresh milk is available. It is possible to use raw materials that have been produced elsewhere at as favourable a moment as possible and at the lowest possible cost, because the raw materials, such as paracaseinates, milk fat and other, possibly dried milk products are capable of being stored and transported. Moreover, the process according to the invention does not require any provisions for processing, or otherwise disposing of, whey at the cheese factory, because in fact the whey constituents are already separated during the paracaseinate production. Thus, at the present time, milk powder is being imported for the production of cheese in tropical and sub-tropical areas, where there are hardly any possibilities of processing or using whey, so that the whey constituents, which make up nearly half the milk powder, remain as waste. This waste problem is not involved in the process according to the invention. Sometimes the yield of cheese is increased by incorporating the protein from the whey into the cheese, for example, by heating the whey and separating the coagulated whey protein by centrifugation, and adding it to the cheese milk to be curdled, and at the present time it has proved possible, with certain types of cheese, to concentrate the milk by ultrafiltration to form a product having substantially the composition of cheese, which can be curdled without further separation of whey. The process according to the present invention is capable of producing similar results, in a simple manner, by incorporating among the ingredients whey protein compositions of known types.

It is also possible, in the process according to the invention, to use, for a certain proportion, raw materials foreign to milk, so that imitation cheese is produced. For example, proteins of animal or vegetable origin, such as soy bean proteins, can be included among the ingredients, provided sufficient calciumreactive paracaseinat is present in the mixture of ingredients to impart the typical cheese structure to the whole by reaction with calcium ions. It is also possible, of course, instead of butter fat to add animal fat of other origin or vegetable fat. With such imitation products, attempts can be made to impart a cheese flavour by means of natural or synthetic flavours, but it is also possible to impart types of flavour to the product quite different from a cheese, for example, a sweet taste, a fruit flavour, a peanut flavour, etc.

As, in the process according to the invention, a mixture of paracaseinate with water, fat and other ingredients is first processed into a homogeneous kneadable mass which, after forming, is converted into cheese in a brine bath, the product can be given any desired shape. This may, in principle, be the same shape as of any known type of cheese, such as Edam, Gouda etc., but just as well that of a rectangular block, a flat disk or any fancy shape.

In many cheese types, the shape plays a role in the ripening process, and in this respect the process according to the present invention readily permits adaptation. If high temperatures are used, the hot liquid mass can be poured into moulds and allowed to set before the treatment in the brine bath. Another suitable process, however, is for the plastic, cooled mass to be extruded through suitable dies by means of an extruder or pump, or to be pumped into moulds.

In the process according to the present invention, the brine treatment follows approximately the same procedure as does the brine treatment in traditional cheese making processes, and also serves the same functions, in addition to the specific function of forming the insoluble casein by reaction between the soluble paracaseinate and calcium ions, whereby the typical cheese structure is produced. In a classical cheese making process, brining serves to preserve the cheese and give it taste and consistency. The cheese can be salted in various ways, namely,

1. Adding salt to the curd
2. Rubbing the cheese with salt
3. Dipping into brine or spraying with brine

During the brining process, the cheese loses moisture and takes up salts from the brine. For bacteriological reasons, cheese is preferably brined at 12—15°C. The duration of the brining treatment depends on the strength of the brine (salt concentration), the temperature, the moisture content of the cheese, the dimensions and shape of the cheese, and the fat content of the cheese. In the process according to the invention, a suitable calcium compound, e.g., a salt such as calcium chloride, calcium lactate, and the like, is added to the brine, so that the dissolved calcium ions can penetrate into the still calcium-reactive mass, and there convert the soluble paracaseinate into real casein. For this purpose, the calcium salt may be dry mixed with the kitchen salt and this mixture may be admixed with the cheese mass, or the moulded pieces of cheese mass may be rubbed with it on their outer surfaces, so that brine is formed with moisture withdrawn from the cheese mass, or a solution of the salts may be used as a dip, or sprayed over the cheese. By diffusion, the casein is then formed gradually from the outside inwardly, whereby the structure of the cheese is changed from that of a rubbery, plastic mass to that of a freshly prepared cheese. By using conventional variations, such as temperature, strength of the salt concentration, shape of the cheese, and type and concentration of the calcium compound, the type of cheese ultimately produced can be influenced.

The process according to the invention, and the particular embodiments found therein are illustrated in and by the following examples.

Example I
Preparation of hard cheese by means of a brine bath

An amount of soluble sodium paracaseinate of 3.45 kg was mixed per batch with 4.20 kg butter oil and 7.65 kg water by means of a Stephan emulsifier heated by means of steam. The emulsion was adjusted to 85°C by indirect heating, and kept at that temperature for 2 minutes. The pasteurized emulsion was subsequently poured into moulds and cooled to about 15°C, whereafter the solidified emulsion was brined by immersion of the shaped pieces in a brine bath. The strength of the brine was 17°Be, and calcium chloride had been added to a calcium ion content of 0.21% by weight; pH was 4.8 to 4.9. Small pieces of cheese (about 75 g) had the desired structure up to heart of the cheese after a residence time in the brine bath as short as 3 hours; larger sizes (about 1.750 g) required a brining period of 48 hours; with larger cheeses the brining period increased to 96 hours.

A Gouda-type cheese thus produced had a protein content of 23%, a fat content of 28%, and a moisture content of 45%.

Example II
Preparation of cheese by means of dry salting

Per batch, an amount of 3.90 kg soluble sodium paracaseinate was mixed with 6.15 kg water and 4.95 kg butter oil by means of a Stephan emulsifier. The emulsion was heated to 80°C, and kept at that temperature for 3 minutes. After this pasteurization, the emulsion was cooled to 10°C, and reduced to regularly shaped pieces. The reduced emulsion was salted in a mixer by adding a salt mixture consisting of 16 parts by weight of sodium chloride and 1 part by weight of calcium chloride. The salted mixture was transferred to cheese moulds of the type conventional for making cheddar cheese, whereafter the cheese was pressed to fuse the shaped pieces together to a normal-sized cheddar cheese, and to remove the excess of salt and water. There was thus obtained a young cheese of the cheddar type containing 35% moisture, 33% milk fat and 26% protein.

### Example III
Preparation of cheese by means of fermentation

Per batch, 4.1 kg potassium paracaseinate was mixed with 0.6 kg skim milk powder, 3.3 kg butter oil and 7.2 kg water by means of a conventional emulsifier. The emulsion was heated to 80°C, and kept at that temperature for 4 minutes. After this pasteurization, the emulsion was cooled to 40°C. In an emulsifier, the emulsion was mixed with 1.2% by weight of a *Streptococcus lactis* type of starter as commercially available for making cheese. The mixed emulsion was incubated in closed vessels at 30°C for 24 hours. Subsequently the ripened mass was re-pasteurized by heating to 80°C for 4 minutes and thereafter poured into moulds. After cooling the shaped pieces were converted into cheese in a brine bath having the same composition as specified in Example I.

### Example IV
Preparation of cheese without using starter culture

Using the same procedure as described in Example III, cheese was made using an enzymatic process by adding, instead of starter culture, enzymes, including commercially available rennet substitutes and acid fungal protease or neutral bacterial protease.

By varying the amount of enzymes, temperature and incubation period, variations in flavour of the resulting cheese ranged from the flavour of fresh cheese to that of matured cheese.

Excessive fermentation, however, gave a rancid of bitter taste.

### Claims

1. A process for preparing food products having the character of cheese and products resembling cheese, characterized by the steps of

a. starting from an isolated, solubilized milk-protein, containing little, if any, calcium, which milk-protein has been converted into a calcium-reactive product for at least a part of the kappa-casein present by the action of a chymosin-like enzyme,

b. preparing a homogeneous, kneadable, water-containing mass from this milk-protein, water and optionally other ingredients including fat, by mixing, and

c. subsequently adding calcium-ions to shaped pieces of this mass and converting these pieces into cheese or cheese-like products.

2. A process according to claim 1, characterized by adding the calcium ions by introducing the shaped pieces into a brine containing calcium ions.

3. A process according to claim 1 or 2, characterized by mixing the ingredients to form a homogeneous, kneadable mass at a temperature of between 70 and 135°C, and thereafter virtually entirely avoiding the admixture of micro-organisms with the product.

4. A process according to claim 1 or 2, characterized by adding, optionally after a heat treatment to de-activate any micro-organisms and/or enzymes that may be present, selected enzyme preparations and/or cultures of micro-organisms which affect the ripening of known cheese types, and allowing the product to ripen under otherwise known conditions while avoiding temperatures at which the enzymes and/or micro-organisms are de-activated.

5. A process according to claim 1, 2, 3 or 4, characterized by selecting butter fat or a fat of different origin as an ingredient for the homogeneous, kneadable mass.

### Patentansprüche

1. Verfahren zur Herstellung von Nahrungsmitteln mit Käsecharakter und käseähnlichen Produkten, gekennzeichnet durch die Schritte

a. des Ausgehens von einem isolierten, löslich gemachten Milchprotein, das, wenn überhaupt, nur wenig Calcium enthält und das hinsichtlich wenigstens eines Teils des vorhandenen kappa-Caseins durch die Einwirkung eines chymosinartigen Enzyms in ein gegenüber Calcium reaktionsfähiges Produkt überführt worden ist,

b. des Herstellens einer homogenen, knetbaren wasserhaltigen Masse aus diesem Milchprotein, Wasser und gegebenenfalls anderen Bestandteilen, einschließlich Fett, durch Vermischen und

c. des anschließenden Zugebens von Calcium-Ionen zu geformten Stücken aus dieser Masse und des Umwandelns dieser Stücke in Käse oder käseähnliche Produkte.

2. Verfahren nach Anspruch 1, dadurch gekennzeichnet, daß man die Calcium-Ionen dadurch zugibt, daß man die geformten Stücke in eine Calcium-Ionen enthaltende Salzlösung bringt.

3. Verfahren nach Ansprüchen 1 oder 2, dadurch gekennzeichnet, daß man die Bestandteile bei einer Temperatur zwischen 70°C und 135°C zu einer homogenen knetbaren Masse vermischt und danach eine Zumischung von Mikroorganismen zu dem Produkt praktisch vollständig vermeidet.

4. Verfahren nach Ansprüchen 1 oder 2, dadurch gekennzeichnet, daß man, gegebenenfalls nach einer Wärmebehandlung zur Desaktivierung irgendwelcher möglicherweise anwesender Mikroorganismen und/oder Enzyme, ausgewählte Enzym-Präparate und/oder Kulturen von Mikroorganismen zusetzt, die die Reifung bekannter Käsesorten beeinflussen, und das Produkt unter sonst bekannten Bedingungen reifen läßt, wobei Temperaturen bei denen die Enzyme und/oder Mikroorganismen desaktiviert werden, vermieden werden.

5. Verfahren nach Ansprüchen 1, 2, 3 oder 4, dadurch gekennzeichnet, daß man Butterfett oder ein Fett anderen Ursprungs als Bestandteil für die homogene knetbare Masse wählt.

### Revendications

1. Procédé de préparation de produits alimentaires ayant l'aspect du fromage et de produits ressemblant au fromage, caractérisé par les étapes de

a. partir d'une protéine isolée et solubilisée du lait, contenant peu ou pas de calcium, laquelle protéine du lait a été convertie en un produit réagissant avec le calcium pour au moins une partie de la caséine kappa présente par l'action d'une enzyme ressemblant à la chymosine,

b. préparer une masse homogène, malaxable, contenant de l'eau à partir de cette protéine du lait, d'eau et éventuellement d'autres ingrédients comprenant des matières grasses, en mélangeant et

c. ajouter subséquemment des ions calcium aux morceaux en forme de cette masse et convertir ces morceaux en fromage ou produits ressemblant au fromage.

2. Procédé selon la revendication 1, caractérisé en ce qu'on ajoute les ions calcium en introduisant les morceaux en forme dans une saumure contenant des ions calcium.

3. Procédé selon la revendication 1 ou 2, caractérisé en ce qu'on mélange les ingrédients pour former une masse homogène malaxable à une température entre 70 et 135°C et ensuite on évite virtuellement totalement le mélange de micro-organismes avec le produit.

4. Procédé selon la revendication 1 ou 2, caractérisé en ce qu'on ajoute, éventuellement après un traitement thermique pour désactiver tout micro-organisme et/ou enzyme pouvant être présent, des préparations choisies d'enzymes et/ou des cultures de micro-organismes qui affectent l'affinage des types connus de fromage et on permet au produit de s'affiner dans d'autres conditions connues tout en évitant des températures auxquelles les enzymes et/ou micro-organismes sont désactivés.

5. Procédé selon la revendication 1, 2, 3 ou 4, caractérisé en ce qu'on choisit de la matière grasse de beurre ou une matière grasse d'une origine différente en tant qu'ingrédient pour la masse homogène, malaxable.